# EUROPEAN PATENT APPLICATION

(11) **EP 2 385 435 A1**
(43) Date of publication of application: **09.11.2011**
(21) Application number: 10160780.2
(22) Date of filing: 22.04.2010
(51) Int. Cl.: G05D 1/02

(54) **A method and a system for gathering data**

(71) Applicant: Danaher Motion Särö AB, 429 80 Särö (SE)
(72) Inventor: Bladh, Peter, 430 33 Fjärås (SE); Palm, Kenneth, 421 38 Västra Frölunda (SE)
(74) Representative: Persson, Albin

(57) **Abstract**

A computer-implemented method of moving a carrier within a facility wherein products are stored at product locations (24), including the steps of gathering position data relative to the product locations and physical location data of data gathering positions. Also product location data and data relating to physical features of the facility are gathered. Gathered data are stored and used to generate layout data and to calculate a route profile based on layout data. The route profile is transferred to an automated guided vehicle.

A system comprises a movable support with a monitoring device and a plurality of sensors capable of gathering physical location data and product location data. The sensors are operatively connected to a first processor. A second processor correlates different data to generate a layout of the facility and develops a plan for movement of the automated guided vehicle.

## Description

### TECHNICAL FIELD

Automated guided vehicles (AGV:s) are frequently used in different facilities such as factories and warehouses. Products and other objects are collected, transported and positioned automatically by an AGV. In some applications an operator assists by picking and storing products on a pallet or other transporting means carried by the AGV. The products and other objects are stored at product locations.

When the AGV moves around in the facility it is imperative that the position of all fixed structures present in the facility and other landmarks are fully and carefully determined in advance, so as to allow the AGV to navigate in a safe and efficient way. Normally, the AGV is supported by an AGV system comprising a stationary control system and a wireless communication system, such as a wireless LAN (WLAN).

### PRIOR ART

Designing a layout for an AGV system is based on a map or a drawing of the facility. The drawing has to be very accurate, errors in distances preferably should be less than or around one centimetre. A CAD (Computer Aided Design) drawing provided by the facility user can be used, but normally is too inaccurate for direct use. Manual measurements may have to be done to improve the accuracy.

It is possible also to use a control system capable of collecting measurement bearings from a laser navigation scanner to a plurality of fixed reference objects, such as retro-reflective strips mounted as artificial landmarks throughout the facility. A method disclosed in US6012003 comprises detecting bearings from a measuring point on a vehicle to a fixed reference object at a predetermined time associated with movement of the vehicle in the facility. The bearings are stored along with the predetermined time associated therewith, and the position of the at least one fixed reference object together with the degree of uncertainty associated with the position from the bearings are continuously computed. The degree of uncertainty is reduced as the vehicle moves in the facility and the position of the fixed reference objects are accurately determined.

Frequently the AGV is used in a warehouse where a warehouse management system (WMS) keeps track of product location identifiers. A connection or cross reference between the WMS and the physical locations used by the AGV is required. When there is a large number of products and product locations the process of cross referencing can become very extensive.

The AGV system needs to have reliable communication coverage with each AGV operating in the facility so as to monitor and control the traffic. Problems may occur if the connection between an AGV and the AGV system drops or is lost during sensitive moments.

There is a need for a more efficient and safer navigation system.

### SUMMARY OF THE INVENTION

It is an object of the present invention to provide a method of gathering data representative of a layout of a facility holding products to be handled and using the data to guide movement of an automated guided vehicle within the facility to move product between product locations in the facility. Bearings to fixed reference points form navigation data and are collected from the laser navigation scanner and other sources are used to build a navigation map of the facility including the positions of the fixed reference points. Further information about landmarks and other objects present in the facility appropriate for producing the layout of the facility also is gathered. Data and information are collected in a portable monitoring device.

Data relative to the product locations are gathered in data gathering positions, each data gathering position being associated to at least one product location. Further data indicative of the physical position of each data gathering position and indicative of each product location are gathered. The physical location data for each data gathering position is correlated with the data indicative of the respective product location to generate layout data representative of a layout of the facility. The layout data is accessed to develop a plan for the movement of an automated guided vehicle in the facility for transferring products from one product location to another product location in the facility.

The gathering of data indicative of a product location includes gathering data relating to an identifier assigned to the product location. The data may also be related to the product or to an identifier associated with the product at the location. A further possibility is to gather data relating to a product storage structure for holding products at the product location. Still another possibility is to gather data relating to a marker positioned adjacent to the product location. The data gathered at the product location can comprise radio frequency (RF) data, infrared radiation (IR) data or visual imaging data.

Data indicative of the data gathering positions can be obtained by gathering data relating to vehicle navigation aids at spaced locations in the facility or relating to physical features of the facility. Other data that can be used comprise GPS data, RF data, IR data, laser range data or visual imaging data. The monitoring device can be carried on a vehicle or by a person.

The navigation map and other combined information are used to produce a geographical map of the environment containing all fixed structures and objects that are visible from the vehicle. The geographical map then is used to calculate travel paths for the automated guided vehicle taking the environment into consideration.

A vehicle used for the gathering of data representative of the facility comprises a movable support for moving through a plurality of data gathering positions in the facility. A first sensor carried by the support is used for gathering data indicative of the physical location of each of the data gathering position, and a second sensor on the support is used for gathering data indicative of product locations in the facility, with each data gathering position being associated with at least one product location.

The vehicle comprises also a memory in communication with the first and second sensors for storing data from the sensors and a first processor for correlating the physical location data for each data gathering position with the data indicative of the respective product location to generate data representative of a layout of the facility. A second processor is designed to develop a plan for the movement of an automated guidance vehicle in the facility for transferring product from one product location to another product location in the facility.

In accordance with the invention a portable monitoring device is moved around the facility through a plurality of data gathering positions. The monitoring device is used to gather data indicative of the physical location of each data gathering position and the RF signal quality in different positions. Data is stored in a memory. Physical location data is correlated with data indicative of the RF signal quality and layout data representative of a layout of the facility is generated. The layout data is accessed and used to develop a plan for the movement of an automated guidance vehicle in the facility for transferring products from one product location to another product location in the facility.

Different aspects of the RF-signal quality are considered, such as RF signal strength relative to a predetermined base station, RF channel coverage or RF data transmission rate relative to a predetermined base station. RF signal quality data can be continuously gathered as the portable monitoring device is moved continuously among product locations.

The portable monitoring device can be designed as a vehicle equipped with a plurality of different sensors. The sensors may include a laser navigation scanner arranged to sense reflector landmarks, such as strips comprising retro-reflective material. A further range sensing device, such as laser scanner, can be used to detect or sense surroundings in a horizontal two-dimensional plane. The portable monitoring device further can comprise side viewing cameras that are used to provide a plurality of images of surroundings of the facility. Images are also produced of product locations and product storage structure supporting pallets and other carriers for the products. The vehicle can be provided with odometry encoders continuously measuring the distance travelled. Wireless communication and measurements can be handled by a LAN adapter or similar device.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic plan view of a facility with a product storage structure and one embodiment of a device in accordance with the invention,
- Fig. 2: is a side elevation view of a vehicle used for data gathering and product transportation in accordance with the invention,
- Fig. 3: is a schematic block diagram of a navigation system illustrating a method of gathering data representative of a layout of a facility in accordance with the invention and
- Fig. 4: is a schematic plan view of a facility with a product storage structure showing different steps of a method in accordance with the invention.

### DETAILED DESCRIPTION

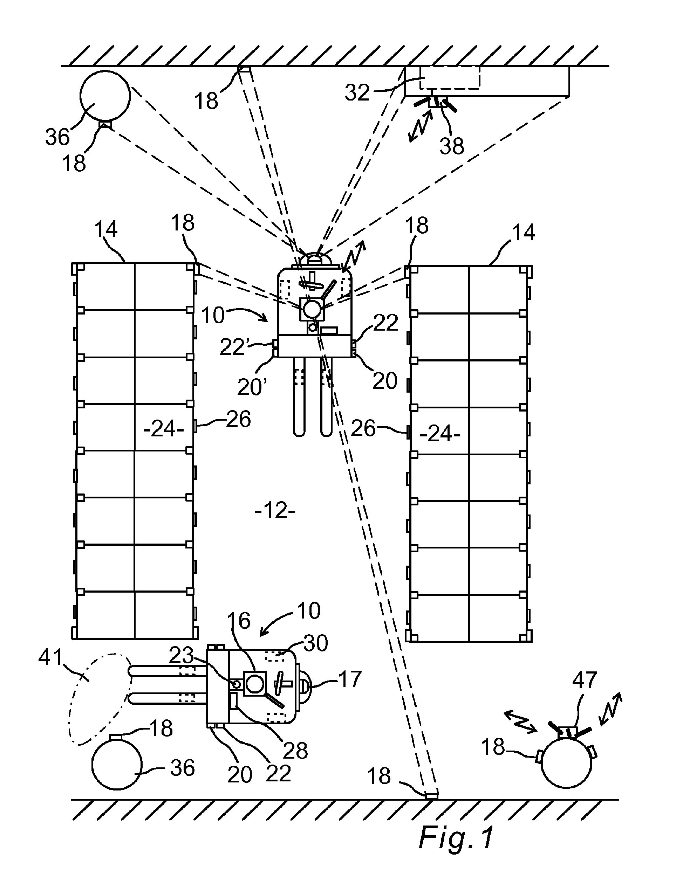

In Fig. 1 a vehicle 10 is positioned on a surface in an aisle 12 between two storage racks 14 in a facility. The vehicle 10 is a portable monitoring device used to gather information that needs to be provided to build a geographical and logical map over the facility. In the shown embodiment the vehicle is an automated guided vehicle (AGV) provided with a laser navigation scanner 16 operating as a first sensor. The scanner emits a laser beam extending substantially parallel to the surface from a rotating head. In the facility there is arranged a plurality of navigation aids such as strips 18 comprising a retro-reflective material. Light from the laser navigation scanner is reflected from the strips and received in a receiver in the rotating head and a bearing toward the strip is determined.

The vehicle also supports a range finding sensor 17 operating as a second sensor. In the shown embodiment the range finding sensor comprises a laser range scanner arranged on the vehicle to sense objects in front of the vehicle and to determine the distance between the vehicle and the objects in the surroundings. The laser range scanner can be used also to sense the presence of any object within a security distance from the vehicle. If such a presence is detected the vehicle can be automatically stopped. Signals from the range finding sensor 17 are used to create two-dimensional images showing the contour of the surrounding environment in the facility. The first sensor 16 and the second sensor 17 can be implemented as one sensor.

While moving through the facility a first camera 20 and a second camera 22 provide images of product storage locations 24 and labels comprising labels or product location identifiers 26 at the storage racks 14. The product location identifiers can comprise text information that can readily be read by an operator or interpreted by an OCR system and barcodes or similar coded information that can be interpreted by a control system. In the shown embodiment the first camera 20 and the second camera 22 are side view cameras. As shown in Fig. 1 a third camera 20' and a fourth camera 22' can be mounted at an opposite side of the vehicle. By using cameras on both sides of the vehicle storage racks on either side of the vehicle can be monitored at the same time.

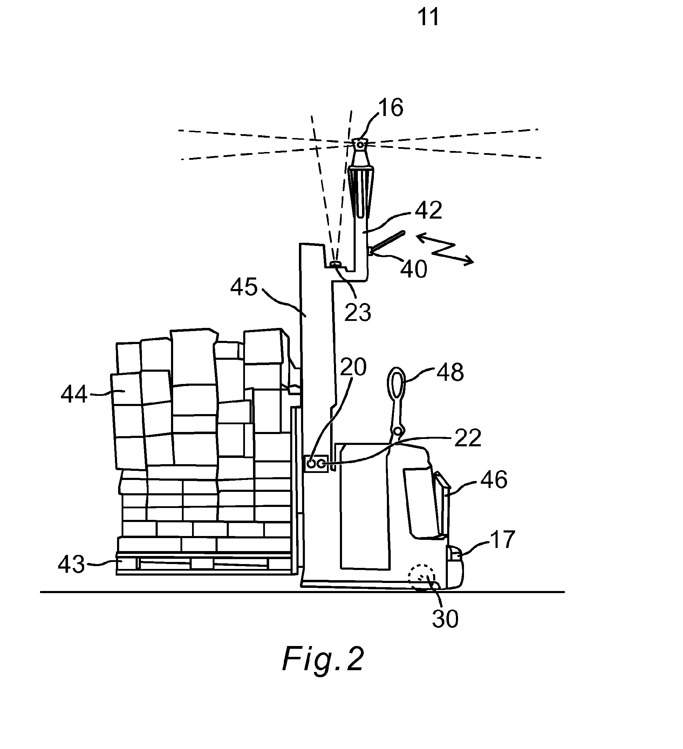

The images obtained from the cameras can be combined to provide a three dimensional view. Image processing can either be done on the fly or by saving the snapshots for later analysis. Identities, numbers and strings found on the labels will be associated with the geographic location where they were obtained. In the embodiment shown in Fig. 1 and Fig. 2 a top camera 23 is arranged to provide images of the ceiling of the facility and barcode or other landmarks provided there.

In accordance with the invention the vehicle 10 is controlled to move around in such areas of the facility where products are to be collected or delivered. In various embodiments the vehicle is provided with controls that allow an operator or driver to control the movements of the vehicle. When an AGV is used to gather information an automated guidance system can be used to control the movements of the vehicle.

During a measuring process the laser navigation scanner 16 continuously emits laser signals and receives reflected signals from the retro-reflective strips 18. The reflected signals continuously are analyzed for instance as set out in US6012003, the disclosure of which is incorporated by reference herein, and the position of the strips 18 is determined. In various embodiments the position of each of the strips 18 is determined in advance. As a further alternative each strip 18 is arranged at a predetermined and specified position which is known to the navigation system.

During the measuring process the vehicle further continuously receives signals from the range finding sensor 17 that are used to form a two-dimensional image showing the contour of the surrounding environment and finally complete map information showing objects, walls and other elements of the facility. In the embodiment shown wheels 30 of the vehicle is provided with encoders for measuring travelled distance by odometry.

In various embodiments information from the different sensors can be combined to obtain the required information. The first sensor can be a camera arranged to provide images of navigation aids arranged in the facility or of naturally existing landmarks therein. A stereo camera can be used to provide three-dimensional information about the facility and distances between landmarks and objects. When the first sensor is a laser range scanner it can be arranged to provide information on distance to and contour of surrounding objects.

In one embodiment the navigation aids comprise radio frequency transmitters and the first sensor comprise a radio frequency receiver capable of determining distance and/or direction to said transmitters.

A vehicle control system unit 28 is arranged on the vehicle to receive signals from the laser range scanner and to combine these signals with navigation data and position information about the reflector landmarks. On the basis of the collected data a geographical map of the environment is formed. The geographical map contains all fixed structures visible from the vehicle and is used to calculate travel paths for automated guided vehicles moving in the facilities between product locations. The vehicle control system 28 comprises wireless communication means (not shown) for communication with a stationary control system 32 providing vehicles with commanding and traffic control information. Vehicles 10 continuously transfer position data to the stationary control system 32, so as to ensure that vehicles are moved in an efficient and safe manner.

The strips 18 can be arranged at different locations around the facility. In various embodiments the strips 18 are provided at the storage racks 14 and specifically at corners of the storage racks 14. They can also be attached to walls 34, pillars 36 and other fixed structures in the facility.

The stationary control system 32 is operatively connected to a stationary radio and antenna system 38 for wireless radio communication with a mobile radio and antenna system 40 provided on the vehicle 10. A plurality of access points 47 also can be arranged around the facility, so as to cover most areas of the facility. The mobile radio and antenna system 40 of the vehicle also can be used to gather signal strength data during an initial measuring process. A set of signal strength data can be used to form a survey map including weak communication spots 41 and other areas where communication difficulties should be taken into consideration. Signal strength data can be stored in the stationary control system 32 and the data can be treated by said system to provide the survey map.

A product storage location 24 normally is labelled with a product location identifier 26 used in manually handled system. A truck driver or order picker uses the product storage location to identify the correct position when placing pallets or picking products and other objects during movement along a path in the facility. The product location identifier 26 also can comprise an RFID (Radio Frequency Identification) tag containing relevant product information. The second sensor can comprise an RFID reader to read said product information at a distance determined by the actual RFID tag and RFID reader.

The embodiment of a vehicle 10 as shown in Fig. 2 is used for an initial measuring process as well as when driving around the facility for picking products and other objects 44. The products are placed on a conventional pallet 43. The laser navigation scanner 16 is arranged at the top of a mast 42 and the range finding sensor 17 is arranged at a front part of the vehicle. The vehicle is a fork truck having a conventional fork lift mechanism 45 supporting the first camera 20 and the second camera 22. The mast 42 also supports the mobile radio and antenna system 40 and the top camera 23.

During the initial process the vehicle 10 can be manually driven or automatically controlled by a navigation system. When manually driven a stand 46 can be lowered from an upright position as shown in Fig. 2 to a horizontal position in which an operator can be standing on it. A steering lever 48 can be pivoted to an operating position from a resting position as shown in Fig. 2.

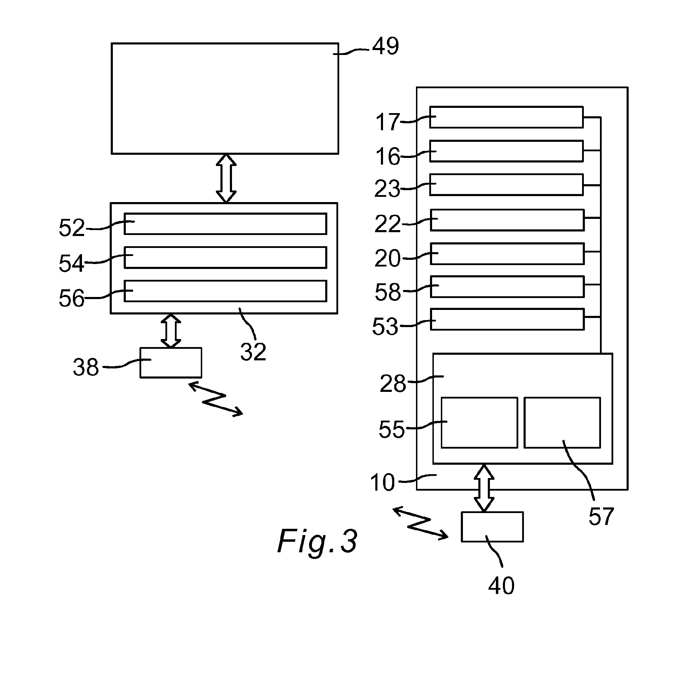

The block diagram of Fig. 3 shows the stationary control system 32 operatively connected to the vehicle control system 28 to transmit driving instructions to the vehicle 10 and commands to drive to specific locations of the facility. The stationary control system 32 in an initial process has received sufficient information about the facility to determine a navigation map containing all artificial and natural landmarks. The navigation map is transmitted to vehicles that are used in the facility and will allow the vehicles to determine at any point of time the present position of the vehicle.

On the vehicle 10 there is provided a plurality of sensors including a laser navigation scanner 16, a range finding sensor 17, a first camera 20, a second camera 22, a top camera 23, odometry encoders 53 on the wheels and a Global Positioning System (GPS) unit 58. The GPS unit preferably is used when the vehicle operates outdoors. All sensors are operatively connected to the vehicle control system unit 28. The mobile radio and antenna system 40 also is operatively connected to the vehicle control system unit 28. It is possible also include a gyro system (not shown) on the vehicle to keep track of the present direction of the vehicle. The vehicle control system 28 comprises a processing unit 55 forming a first processor and a memory unit 57 for storing position data and other data. The processing unit 55 also controls the sensors provided on the vehicle.

The stationary control system 32 also comprises guidance map calculating means 52, a routing map calculating means 54 and a communication map calculating means 56 forming together a second processor. The guidance map calculating means 52, routing map calculating means 54 and communication map calculating means 56 receives information from the vehicle through the stationary radio and antenna system 40. In various embodiments first processor and second processor are implemented as a single processor, preferably provided on the vehicle.

The guidance map will contain driving instructions for how to drive the vehicle between different locations in the facility. This includes information on directions, curve shapes, speeds and other attributes necessary for the vehicle to be able to drive and to reach any position. The routing map will contain all stop points necessary to be able to send the vehicle to all possible locations in the facility. All important stop points has also a predefined identity that the system will need to able to cross reference when communicating with upper level systems 49, such as Warehouse Management System (WMS), Manufacturing Execution Systems (MES), or Enterprise Resource Planning systems (ERP). The communication map determines areas of the facility where there is an acceptable communication capability and areas where there are weak communication spots.

When calculating and determining drive paths included in the guidance map different aspects are considered. These aspects include safety requirements and performance requirements. Details such as minimum distances to fixed objects and structures also are considered.

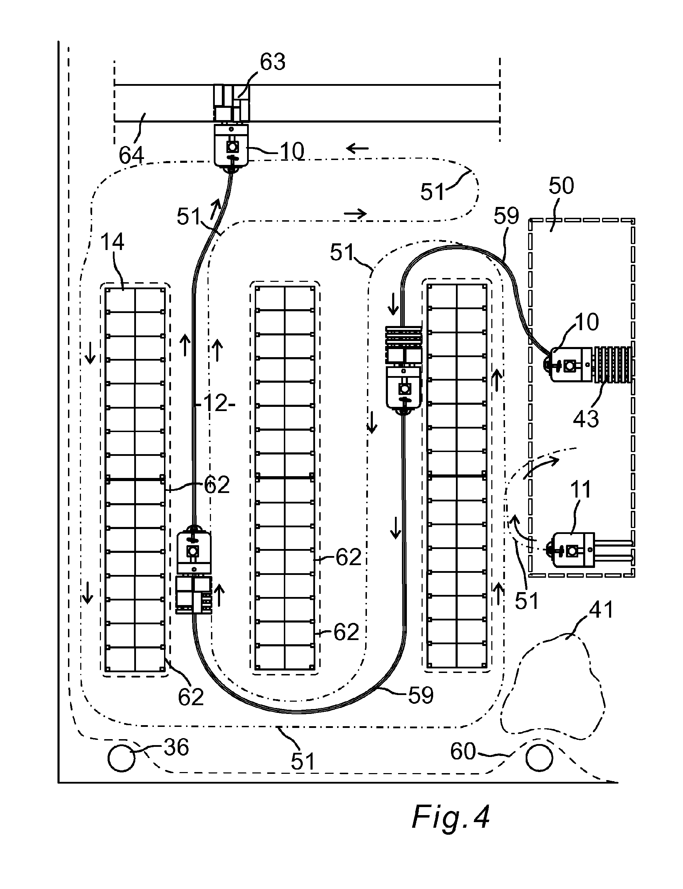

The schematic view of Fig. 4 shows a facility with three storage racks 14 with aisles 12 separating them. Vehicles 10 automatically move from a parking area 50 through the facility according to a travel path 59 with reference to a guidance map. Reference is also made to a predetermined security area 60 set out by the stationary control system where the vehicles are not allowed to travel. The security area mainly is determined by a shortest allowed distance to fixed objects such as storage racks and pillars. Other possible travel paths for specific combination of tasks are calculated on demand.

A data gathering vehicle 11 operating as a monitoring device is initially moved around in the facility in all areas where products and objects are to be picked and delivered. As shown in Fig. 1 the data gathering vehicle 11 has moved along a route 51. During the movement along the route 51 through a plurality of data gathering positions all necessary data relating to the position fixed objects, possible paths and product locations are gathered and stored. Weak communication spots 41 are determined and later eliminated by re-arranging or adding access points 47.

A vehicle 10, such as an AGV, starts from the parking area 50 with an empty pallet. A picking list including products to be picked is transferred to the vehicle 10 from the stationary control system 32. Also data relating to a guidance map including driving instructions and a travel path 58 are transferred from the stationary control system 32 to the vehicle. During travel along the path 58 products 63 and objects picked at product locations 62 are placed on the pallet. The product locations 62 are based on position data determined during an initial phase.

After completion of the travel along the path 58 the vehicle automatically moves to a conveying belt 64 or to a storage location where the pallet is left. The vehicle then can return to the parking area 50. In various embodiments the vehicle 10 instead delivers the pallet with products in a truck (not shown). The data gathering vehicle 11 can be identical to the vehicle 10 used for transporting products.

While certain illustrative embodiments of the invention have been described in particularity, it will be understood that various other modifications will be readily apparent to those skilled in the art without departing from the scope and spirit of the invention. Accordingly, it is not intended that the scope of the claims appended hereto be limited to the description set forth herein but rather that the claims be construed as encompassing all equivalents of the present invention which are apparent to those skilled in the art to which the invention pertains.

## Claims

1. A computer-implemented method of moving a carrier within a facility wherein products are stored at product locations (24), the method comprising the following steps:
■ providing a portable monitoring device at the carrier for gathering position data relative to the product locations;
■ moving the monitoring device through a plurality of data gathering positions in the facility to obtain a first set of physical location data indicative of the physical location of each data gathering position;
■ gathering in the monitoring device product location data indicative of product locations in relation to at least one associated data gathering position;
■ storing said first set of physical location data and said product location data;
■ generating layout data representative of a layout of the facility by correlating said first set of physical location data and said product location data;
■ calculating a route profile based on said generated layout data; and
■ using the route profile in an automated guidance vehicle for moving the automated guidance vehicle to transfer products from one product location to another product location in the facility.

2. The method of claim 1 also including the step of gathering in the monitoring device a second set of physical location data indicative of location specific physical features of the facility and storing said second set of physical location data..

3. The method of claim 1 wherein the gathering of data indicative of a product location (24) includes gathering data relating to an identifier (26) assigned to the product location.

4. The method of claim 1 wherein the gathering of data indicative of a product location includes gathering data relating to an identifier associated with the product at the product location.

5. The method of claim 1 wherein the gathering of data indicative of a product location includes gathering visual imaging data.

6. The method of claim 2 wherein the gathering of data indicative of the data gathering positions comprises gathering data relating to vehicle navigation aids (18) at spaced locations in the facility.

7. The method of claim 2 wherein the gathering of data indicative of the data gathering positions comprises gathering data relating to physical features of the facility.

8. The method of claim 1 wherein the gathering of data indicative of the data gathering positions comprises visual imaging data.

9. The method of claim 1 wherein the gathering of data indicative of the data gathering positions comprises laser range data.

10. The method of claim 1 wherein the gathering of data for data gathering positions is done continuously as the monitoring device moves through the plurality of data gathering positions in the facility.

11. A system for gathering data representative of a layout of a facility holding products to be handled and using the data to guide an automated guidance vehicle (10; 11) within the facility to move product between product locations in the facility, comprising:
■ a movable support comprising a monitoring device for moving through a plurality of data gathering positions in the facility;
■ a first sensor in the monitoring device for gathering data indicative of the physical location of each of the data gathering position;
■ a second sensor in the monitoring device for gathering data indicative of product locations in the facility, with each data gathering position being associated with at least one product location;
■ a first processor (55) controlling said first sensor and said second sensor;
■ memory (57) in communication with the first and second sensors for storing data from the sensors and with said first processor; and
■ a second processor (52, 54, 56) for correlating the physical location data for each data gathering position with the data indicative of the respective product location to generate data representative of a layout of the facility; and for accessing the layout data to develop a plan for the movement of an automated guidance vehicle in the facility for transferring product from one product location to another product location in the facility.

12. The system of claim 11, wherein a plurality of navigation aids is arranged in the facility and the first sensor is a laser navigation scanner arranged to receive laser signals reflected from said plurality of navigation aids.

13. The system of claim 11, wherein the second sensor comprises at least one camera capable of obtaining images containing product location information.

14. The system of claim 11, wherein the monitoring device comprises a radio transceiver (40) for obtaining signals indicative of wireless RF signal quality in different data gathering positions.

15. The device of claim 14, wherein at least one stationary radio and antenna system (38) is provided to transmit RF signals to said transceiver.

16. The system of claim 11, wherein a plurality of navigation aids is arranged in the facility and the first sensor is a camera arranged to provide images of said navigation aids.

17. The system of claim 11, wherein the first sensor is a laser range scanner arranged to provide information on distance to and contour of surrounding objects.

18. The system of claim 11, wherein a plurality of navigation aids comprising radio frequency emitting means is arranged in the facility and the first sensor is a radio frequency receiver arranged to provide measurements relating to distance and direction to said navigation aids.

19. The system of claim 11, wherein the first sensor is a stereo camera arranged to provide images containing natural landmarks of the facility.

20. The system of claim 11, wherein the second sensor comprises at least one RFID reader arranged to read radio frequency information associated with product locations.
